(19)

Europäisches
Patentamt
European
Patent Office
Office européen
des brevets

(11) **EP 4 019 129 A1**

(12) **EUROPEAN PATENT APPLICATION**

(43) Date of publication:
**29.06.2022 Bulletin 2022/26**

(21) Application number: **20306700.4**

(22) Date of filing: **28.12.2020**

(51) International Patent Classification (IPC):
**B01J 31/40** (2006.01)  **B01J 20/10** (2006.01)
**B01J 20/12** (2006.01)  **B01J 20/14** (2006.01)
**B01J 20/28** (2006.01)

(52) Cooperative Patent Classification (CPC):
**B01J 20/106; B01J 20/12; B01J 20/14;**
**B01J 20/28061; B01J 31/4038; B01J 31/4046;**
**B01J 31/4092;** B01J 2220/42

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **SUEZ Groupe**
**92040 Paris la Défense Cedex (FR)**

(72) Inventors:
• **DE BRUYNE, Bram**
  **9140 Tielrode (BE)**
• **WAUTERS, Franck**
  **92040 Paris La Défense (FR)**

(54) **METHOD FOR RECOVERING A METAL CONTAINING HOMOGENEOUS CATALYST USING SOLID ADSORBENTS**

(57)    The present invention relates to a method for recovering a spent metal-containing homogeneous catalyst using a solid adsorbent selected from bleaching agents, filter aids and mixtures thereof. In particular, the solid adsorbent is selected from bleaching earths, perlites, diatomaceous earths and mixtures thereof.

The present invention relates to a method for recovering a spent metal-containing homogeneous catalyst comprising the following steps:

(A) providing a solution containing said spent metal-containing homogeneous catalyst, said solution containing at least one solvent selected from water and an organic solvent,
(B) adding to said provided solution said solid adsorbent to obtain a suspension of a solid and a solvent,
(C) separating said suspension to obtain a purified solvent and the solid adsorbent containing said spent metal-containing homogeneous catalyst adsorbed thereon.

EP 4 019 129 A1

## Description

**Field of the invention**

The present invention relates to a method for recovering a metal-containing homogeneous catalyst, in particular a spent homogeneous catalyst containing metal, using solid adsorbents.

**Background of the invention**

Many catalysts contain metal, the recovery of which is desirable from an environmental and economical point of view, all the more considering the scarcity of some metals. Metal-containing catalysts may be recovered for reuse after regeneration, or merely for metal recovery.

Catalysts can be classified into two categories: homogeneous and heterogeneous catalysts. Homogeneous catalysts are characterized in that they exist in the same phase (gas or liquid) as the reactants, while heterogeneous catalysts are not in the same phase as the reactants.

Typically, heterogeneous catalysis involves the use of solid catalysts placed in a liquid reaction mixture. Spent heterogeneous catalysts are therefore easily recovered by filtration or other separation technics.

In contrast, spent homogeneous catalysts, in particular soluble organometallic compounds, may be difficult to recover after use. It may indeed prove difficult to recover spent homogeneous catalysts especially when their concentration is low, such as those usually used in catalytic reactions involving "precious" transition metals such as Ag, Au, Pt, Pd, Rh, Ir, Ru. As a result, pretreatments such as concentration are required prior to recovery. However, evaporation-based concentration is not an energy-efficient process, and may induce side-reactions due to the presence of the catalyst in the reaction mixture. Additionally, when solutions to be treated (i.e. containing the spent catalyst) further contain salts, concentration may lead to pasty and solid evaporation residues, difficult to handle and with higher chances of material losses. Moreover, on certain industrial sites, the volume of waste containing undesired residual volatile organic components, such as organic solvent-based solutions, allowed to be treated may be limited for safety reasons, technical reasons or regulatory provisions.

Finally, metal recovery is sometimes not even envisaged because evaporation requires specific equipment, which may not be present on site, in particular in treatment facilities focused on/designed solely for solvent recovery.

There is therefore a need for an improved method for concentrating a solution of spent homogeneous metal-containing catalyst. The method of the invention should allow to obtain concentrations up to levels sufficient for viable metal recovery, in economical as well as technical terms, be cost-efficient, easy to implement, not requiring any specific equipment to be implemented. The concentrated spent homogeneous metal-containing catalyst obtained in the method of the invention should thus be suitable for direct implementation of further refinery steps, in particular for metal recovery.

**Summary of the invention**

The present invention provides a method for recovering metal from a solution containing a spent metal-containing homogeneous catalyst, said method comprising using specific inorganic adsorbents. Such solutions containing a spent metal-containing homogeneous catalyst - usually considered as a liquid waste to be treated - may in particular stem from an industrial process comprising a reaction step catalyzed with a homogeneous metal-containing catalyst, and/or may stem from an industrial unit.

The specific inorganic adsorbents used in the present invention allow concentrating said spent metal-containing homogeneous catalyst up to levels sufficient for further recycling of said catalyst, in a further metal or catalyst recovery process including for instance a refining treatment step. The method of the present invention is more energy- and cost-efficient than conventional evaporation-based concentration methods.

In a first aspect, the invention concerns a method for recovering a spent metal-containing homogeneous catalyst using a solid adsorbent selected from bleaching agents, filter aids and mixtures thereof.

In other words, the invention concerns the use of the above-listed solid adsorbents as spent metal-containing homogeneous catalyst recovery agents.

Advantageously, the solid adsorbent may be selected from bleaching earths, perlites, diatomaceous earths and mixtures thereof. Such adsorbents are environmentally friendly and easily available at limited cost.

The invention also concerns a method for recovering a spent metal-containing homogeneous catalyst, said method comprising the following steps:

(A) providing a solution containing said spent metal-containing homogeneous catalyst, said solution containing at least one solvent selected from water and an organic solvent,
(B) adding to said provided solution a solid adsorbent as described above or below to obtain a suspension of a solid and a solvent,

(C) separating said suspension to obtain a purified solvent and said solid adsorbent containing said spent metal-containing homogeneous catalyst adsorbed thereon.

**Detailed description**

When describing the invention, the terms used are to be construed in accordance with the following definitions, unless a context dictates otherwise.

As used herein, the singular forms "a", "an", and "the" include both singular and plural referents unless the context clearly dictates otherwise. By way of example, "a solvent" means one solvent or more than one solvent.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

Preferred statements (features) and embodiments and uses of this invention are set herein below. Each statement and embodiment of the invention so defined may be combined with any other statement and/or embodiment unless clearly indicated to the contrary. In particular, any feature indicated as being preferred or advantageous may be combined with any other feature or features or statements indicated as being preferred or advantageous. Hereto, the present invention is in particular captured by any one or any combination of one or more of the below aspects and embodiments, with any other statement and/or embodiment.

Spent metal-containing homogeneous catalyst

Homogeneous catalysts are typically organometallic compounds. Such organometallic compounds usually contain one or more metals surrounded by ligands.

The present invention is more particularly intended to the treatment of spent homogeneous catalysts comprising one or more transition metals of the periodic table. The transition metal may be a noble metal or a metal active as a catalyst or catalyst promoter.

In one embodiment, the transition metal may be selected from Ag, Au, Pt, Pd, Rh, Ir, Ru, preferably Pd and Ru.

The ligands may be monodentate or polydentate ligands, such as bidentate ligands. Examples of ligands used in homogeneous catalysis are:

- ◦ hydrides (-H),
- ◦ halides, in particular fluorine, bromine, chlorine or iodine anion, preferably Cl- and Br-;
- ◦ -carboxylates, typically of formula RCOO-, wherein R is alkyl, alkenyl, allyl ($CH_2=CH-CH_2$), or phenylallyl,
- ◦ dibenzylideneacetone,
- ◦ siloxanes, typically of formula $R_2Si-O$, wherein R are the same or different and independently represent alkyl, alkenyl or H, and preferably one R represents alkenyl; alternatively, the siloxanes may comprise or consist of several units of formula $R_2Si-O$ with R as described above, and optionally having branched, unbranched or cyclic backbones consisting of alternating silicon and oxygen atoms [-Si-O-Si-O-], with side chains R attached to the silicon atoms,
- ◦ disiloxanes, typically of formula $R_3Si-O-SiR_3$, wherein R are the same or different and independently represent alkyl, alkenyl or H, and preferably one R represents alkenyl,
- ◦ phosphines, typically of formula $PR_3$, wherein R are the same or different and independently represent alkyl, aryl, H ;
- ◦ phosphites, typically of formula $P(OR)_3$, wherein R are the same or different and independently represent alkyl, aryl, H,
∘ nucleophilic carbenes,
∘ N-heterocyclic carbene such as :

- imidazoline-2-ylidene optionally substituted at the 1 and 3 positions independently with an aromatic group or an alkyl group, and substituted at the 4 and 5 positions independently with a group selected from hydrogen, halogen, an alkyl group, an aryl group ;
- imidazolidine-2-ylidene wherein the 1 and 3 positions are optionally each, independently, substituted by an aromatic group or an alkyl group, the 4 and 5 positions are each, independently, selected from hydrogen, halogen, an alkyl group, an aryl group,
- bis(imidazoline-2-ylidene) wherein a bridging moiety is bound to one nitrogen atom of each ring, wherein the bridge formed by the bridging moiety has at least five atoms, and wherein the remaining two nitrogen atoms are each, independently, substituted by an aromatic group or an alkyl group,
- bis(imidazolidine-2-ylidene) wherein a bridging moiety is bound to one nitrogen atom of each ring, wherein the bridge formed by the bridging moiety has at least five atoms, and wherein the remaining two nitrogen atoms are each, independently, substituted by an aromatic group or an alkyl group,
- benzimidazol-2-ylidene wherein the 1 and 3 positions are each, independently, substituted by an aromatic group or an alkyl group,

∘ pyridine, or derivatives thereof, in particular a pyridine substituted with 1 to 3 groups independently selected from an alkyl, an aryl or a halogen atom, such as 3-chloropyridine;
∘ acetonates, typically of formula RCOCHCOR'-, wherein R and R' are the same or different and independently represent alkyl, aryl, H, halogen),
∘ cycloalkenyl ligands (in particular $C_3$-$C_8$ cycloalkenyls, e.g. cyclopentadienyl, 1,5-cyclooctadienyl),
∘ porphyrin, optionally mono- or polysubstituted with groups independently selected from an alkyl, an aryl or a halogen atom.

As used herein, a "halide" refers to a fluorine, bromine, chlorine or iodine anion, preferably a chlorine or bromine anion.

As used herein, a "halogen" refers to a fluorine, bromine, chlorine or iodine atom, preferably a chlorine or fluorine atom.

As used herein, an "alkyl" is understood as a "($C_1$-$C_6$)alkyl", which refers to a monovalent straight or branched saturated hydrocarbon chain containing from 1 to 6 carbon atoms including, but not limited to, methyl, ethyl, n-propyl, iso-propyl, n-butyl, iso-butyl, sec-butyl, t-butyl, n-pentyl, n-hexyl, and the like.

As used herein, an "alkenyl" is understood as a "($C_2$-$C_6$)alkenyl", refers to a monovalent straight or branched unsaturated hydrocarbon chain containing from 2 to 6 carbon atoms and comprising at least one double bond including, but not limited to, ethenyl, propenyl, butenyl, pentenyl, hexenyl and the like.

As used herein, an "aryl group" may be an aromatic or heteroaromatic group.

The term "aromatic group" as used herein alone or as part of another group denotes optionally substituted homocyclic aromatic groups, preferably monocyclic or bicyclic (fused) groups, containing from 6 to 12 carbons in the ring portion, such as phenyl, naphthyl and indenyle. Phenyl and indenyle are the more preferred aromatic groups.

The term "heteroaromatic" as used herein alone or as part of another group denotes optionally substituted aromatic groups having 5 to 12 ring atoms, at least one heteroatom in at least one ring, and preferably 5 or 6 atoms in each ring. The remainder of the ring atoms are carbon atoms. The heteroaromatic group preferably has 1 to 3 heteroatoms preferably selected from O, N and S in the ring, and may be bonded to the remainder of the molecule through a carbon or heteroatom. Exemplary heteroaromatics include furyl, thiophenyl, pyrrolyl, isoxazolyl, oxazolyl, isothiazolyl, thiazolyl, imidazolyl, triazolyl, pyridyl, pyrimidinyl, pyrazinyl, pyridazinyl, indolyl, quinolinyl, or isoquinolinyl and the like. Preferably, the heteroaromatic group is selected from a pyrrolyl, thiophenyl, isoxazolyl, triazolyl, oxazolyl, and thiazolyl, benzothiazolyl, benzotriazolyl, pyrindinyl and pyrazinyl, in particular 1,3-oxazolyl, 1,3-thiazolyl, 1,2,3-triazolyl, benzothiazolyl, benzotriazolyl, pyrindinyl and pyrazinyl.

As used herein, a "carbocyclic group" is understood as a "($C_3$-$C_8$)cycloalkyl", which refers to a hydrocarbon ring having 3 to 8 carbon atoms including, but not limited to, cyclopropyl, cyclopentyl, cyclohexyl and the like.

As used herein, a "nucleophilic carbene" is understood as a carbene typically having a carbon atom bearing a lone pair of electrons, and further including an electron-withdrawing group in electronic communication with, or bonded to, the carbon bearing the lone pair. Such electron withdrawing atoms or substituents generally include atoms which are more electronegative than a carbon atom, such as nitrogen, oxygen, and sulfur. These atoms can either be bonded directly to the carbenic carbon, or in a conjugated or hyperconjugated position with respect to this carbon. Electron-withdrawing substituents or groups include nitro, halogen, sulfonate, carbonate, sulfide, thioether, cyano, and other groups known to those in the art.

Solid adsorbent used as homogeneous metal catalyst recovery agent

According to the invention, solid adsorbents that can be used are bleaching agents, filter aids or mixtures thereof.

Filter aids are well-known and are usually solid materials, insoluble in a liquid to be filtered, which are added to the liquid or are coated upon a filter or filter support, their purpose being to speed filtration, reduce fouling of the filter surface, reduce cracking of the filter layer, or otherwise to improve filtration characteristics. Materials which are frequently used as filter aids include diatomaceous earth and perlite.

Solid adsorbents may be for example:

- bleaching earths, for example commercialized under trade name Tonsil or Sepigel,

- filter aids such as perlite, or

- diatomaceous earths, for example commercialized under trade name Clarcel or Celatom.

Said adsorbents are solid compositions comprising silicium oxide ($SiO_2$) as major compound, one or more oxides selected from aluminium oxide ($Al_2O_3$), iron III oxide ($Fe_2O_3$), potassium oxide ($K_2O$), magnesium oxide (MgO) calcium oxide (CaO), sodium oxide ($Na_2O$) and potassium oxide ($K_2O$). The sum of these oxides advantageously represents 85wt% or more, typically 90wt% or more of the total solid composition, the remaining typically include volatile matter including water, organic compounds, inorganic compounds (in particular carbonates). In any case, the sum of the above oxides does not represent more than 100wt% of the total solid composition.

As used herein, a "major compound" is understood with its usual meaning, that is to say that said major compound represents 50 wt% or more, with respect to the total solid composition.

Said adsorbents are solid compositions that may comprise 50.0 to 95.0wt% of silicium oxide ($SiO_2$), from 5.0 to 50.0wt% of one or more oxides selected from aluminium oxide ($Al_2O_3$), iron III oxide ($Fe_2O_3$), potassium oxide ($K_2O$), calcium oxide (CaO), sodium oxide ($Na_2O$) and magnesium oxide (MgO).

In particular, said adsorbents are solid compositions that may comprise from 50.0 to 95.0 wt% of silicium oxide ($SiO_2$), from 0.5 to 25.0wt% of a compound or mixture of compounds selected from aluminium oxide ($Al_2O_3$), iron III oxide ($Fe_2O_3$), from 0.0 to 35.0wt% of a compound or mixture of compounds selected from calcium oxide (CaO), sodium oxide ($Na_2O$), magnesium oxide (MgO) and potassium oxide ($K_2O$).

Typically, said adsorbents are solid compositions that may comprise from 50.0 to 95.0 wt% of silicium oxide ($SiO_2$), from 6 to 25.0wt% of aluminium oxide ($Al_2O_3$) and iron III oxide ($Fe_2O_3$), from 0.0 to 35.0wt% of a compound or mixture of compounds selected from calcium oxide (CaO), sodium oxide ($Na_2O$), magnesium oxide (MgO) and potassium oxide ($K_2O$).

In a particular embodiment, said solid adsorbents are solid composition comprising silicium oxide ($SiO_2$) as major compound, aluminium oxide ($Al_2O_3$), iron III oxide ($Fe_2O_3$), and one or more oxides selected from, magnesium oxide (MgO), calcium oxide (CaO), sodium oxide ($Na_2O$) and potassium oxide ($K_2O$). Examples of such solid adsorbent are bleaching agents, in particular bleaching earths. Bleaching earths may comprise from 50.0 to 75.0 wt% of silicium oxide ($SiO_2$), from 1.0 to 40.0wt% of a compound or mixture of compounds selected from aluminium oxide ($Al_2O_3$) and magnesium oxide (MgO), from 1.0 to 5.0wt% of iron III oxide ($Fe_2O_3$), from 0.5 to 6.0wt% of potassium oxide ($K_2O$), from 0.0 to 6.0wt% of a compound or mixture of compounds selected from calcium oxide (CaO) and Sodium Oxide ($Na_2O$). Typically, Bleaching earths may comprise from 50.0 to 75.0 wt% of silicium oxide ($SiO_2$), from 10.0 to 40.0wt% of the sum of aluminium oxide ($Al_2O_3$) and magnesium oxide (MgO), from 0.5 to 5.0wt% of iron III oxide ($Fe_2O_3$), from 0.5 to 6.0wt% of potassium oxide ($K_2O$), from 0.0 to 6.0wt% of a compound or mixture of compounds selected from calcium oxide (CaO) and Sodium Oxide ($Na_2O$).

According to the invention a suitable bleaching agent is sold under the trade name Tonsil@. It may comprise from 65.0 to 75.0 wt% of silicium oxide ($SiO_2$), from 13.0 to 16.0wt% of aluminium oxide ($Al_2O_3$), from 0.0 to 3.0wt% of magnesium oxide (MgO), from 2.0 to 4.0 wt% of iron III oxide ($Fe_2O_3$), from 1.0 to 5.0wt% of potassium oxide ($K_2O$), from 0.0 to 6.0wt% of calcium oxide (CaO) and from 0.0 to 1.0wt% of sodium oxide ($Na_2O$).

According to the invention a suitable bleaching agent is sold under the trade name Sepigel®. It may comprise from 50.0 to 60.0 wt% of silicium oxide ($SiO_2$), from 3.5 to 6.0wt% of aluminium oxide ($Al_2O_3$), from 20.0 to 35.0wt% of magnesium oxide (MgO), from 0.5 to 2.5wt% of iron III oxide ($Fe_2O_3$), from 0.5 to 2.0wt% of potassium oxide ($K_2O$), from 0.1 to 1.5wt% of calcium oxide (CaO) and from 0.0 to 2.0wt% of sodium oxide ($Na_2O$).

As for example the following may be used, Sepigel® A220RF, Sepigel® D1, Tonsil® 210FF, Tonsil® Optimum 210FF (CAS number 70131-50-9), Tonsil® 217, Tonsil® C0614G and Tonsil® CO 616G.

Bleaching earths are activated earths that are typically obtained by an acid activation process of a clay. Such activation treatments confer specific properties to the clay allowing in particular improving their adsorptive capacity, acid properties, catalytic properties, ion exchange capacity and particle size distribution. Bleaching earths are thus useful not only as adsorbent but also as filtration aid. Typical examples of bleaching earths are activated bentonites, such as activated calcium bentonite.

In another particular embodiment, said solid adsorbents are solid composition comprising silicium oxide ($SiO_2$) as major compound, aluminium oxide ($Al_2O_3$), and one or more oxides selected from iron III oxide ($Fe_2O_3$), calcium oxide (CaO), sodium oxide ($Na_2O$), magnesium oxide (MgO) and potassium oxide ($K_2O$). An example of such solid adsorbent is perlite.

Perlite may comprise from 50.0 to 80.0 wt% of silicium oxide ($SiO_2$), from 4.0 to 18.0wt% of aluminium oxide ($Al_2O_3$), from 0.0 to 2.5 wt% of iron III oxide ($Fe_2O_3$), from 0.5 to 7.0wt% of potassium oxide ($K_2O$), from 0.0 to 2.5wt% of calcium oxide (CaO), , from 0.2 to 5.0wt% of sodium oxide ($Na_2O$) and from 0.1 to 1wt% or from 20 to 35wt% of magnesium oxide (MgO).

In another particular embodiment, said solid adsorbents are solid composition comprising silicium oxide ($SiO_2$) as major compound, aluminium oxide ($Al_2O_3$) and iron III oxide ($Fe_2O_3$). Calcium oxide (CaO) and/or magnesium oxide (MgO) may also be present. An example of such solid adsorbent is diatomaceous earth. Typically, diatomaceous earths comprise from 80.0 to 95.0wt% of silicium oxide ($SiO_2$), from 0.1 to 9.0wt% of aluminium oxide ($Al_2O_3$), from 0.1 to 4.5wt% of iron III oxide ($Fe_2O_3$), from 0.0 to 4.5wt% of calcium oxide (CaO) and from 0.0 to 1.5 wt% of magnesium oxide (MgO).

A solid adsorbent used in the invention is typically in powder form or in granular form. Advantageously, said powder or granular solid adsorbent possesses a particle size (or grain size) of 0.1mm or less.

The particle size of the powder or granules may advantageously be chosen so as to avoid fouling of a membrane when passing said solid adsorbent contained in a solution through a membrane. The "particle size", which herein refers to the maximum size of the particle, may be determined by statistical analysis of electron microscopy images. It may alternatively be easily determined by the person skilled in the art by filtration.

By way of example, powders having a particle size distribution in which a major part of the particles, in particular 50wt% or more of the particles, more particularly from 50 to 95wt% of the particles, have a size from 25 to 150μm or from 25 to 100μm may be used. Similarly, granules having a particle size distribution in which a major part of the granules, in particular 90wt% or more of the particles, have a size from 0.25 to 1.5mm or from 0.5 to 1.25mm or from 0.25 to 1mm may be used.

A solid adsorbent used in the invention may present a specific surface area of 150m$^2$/g or more, preferably of 180m$^2$/g or more, more preferably of 200m$^2$/g or more, most preferably of 250m$^2$/g or more, for example from 150 to 400m$^2$/g or within any of these limits.

As used herein, the specific surface area is understood as the total surface area of a material per unit of mass (with units of m$^2$/kg or m$^2$/g), and is typically measured using the well-known B.E.T. method.

Description of the spent catalyst recovery method

Advantageously, in a first step (A), there is provided a solution containing said spent metal-containing homogeneous catalyst.

Said solution may contain at least one solvent selected from water and an organic solvent.

The spent metal-containing homogeneous catalyst to be recovered by the present invention is typically contained in an organic, aqueous, or mixed organic/aqueous solution. Such solution may be process or effluent streams from a catalytic reaction for the preparation of intermediates or active compounds, for example pharmaceuticals, pesticides, flavors or fragrances or any other catalytic reaction using metal-containing homogenous catalysts.

This solution is for example recovered from a catalytic reaction system after separation of the intermediates or active compounds from a process or effluent stream. This solution is a complex system that may contain unreacted products, by-products, solvents in addition to the spent catalyst. The spent catalyst may itself have undergone modifications.

The solution containing the spent catalyst may thus contain one or several solvents which can be an organic solvent or water. In one embodiment, the solution may contain a single solvent. Said organic solvents include any organic solvent used in the above mentioned catalytic reactions, for example aromatic hydrocarbons solvents such as toluene, ketones such as acetone, heterocyclic ether solvents such as tetrahydrofuran, nitrile solvents such as acetonitrile, alcohols such as isopropanol, acetate solvents.

In the method of the present invention, a solution containing one or several spent metal-containing homogeneous catalysts may be treated by the solid adsorbent used as spent homogeneous metal catalyst recovery agent. In a preferred embodiment, the solution may contain a single spent homogeneous catalyst, in particular containing a single transition metal.

In a second step (B), a solid adsorbent is added to the solution provided in step (A) to obtain a suspension of a solid and a solvent. The solid adsorbent is as described above.

In one embodiment, before step (B), the solution provided in step (A) may optionally be submitted to at least one pre-treatment, preferably chosen from pH adjustment, homogenization, liquid-solid separation, polarity and optionally proticity adjustment. Such treatment(s) may contribute to optimization of the metal recovery rate.

In one embodiment, before step (B), the pH of the solution provided in step (A) is modified, for instance it may be adjusted to a basic, neutral or acidic pH. The pH may be adjusted by addition of a base or an acid. The pH value may indeed enhance adsorption of the spent catalyst on the solid adsorbent, for example by modifying interactions between the surface of the solid adsorbent and the spent catalyst, by modifying the ligand and/or by solvation effects.

Examples of bases suitable for modifying the pH include alkali and earth alkali oxides, alkali and earth alkali hydroxides (e.g. NaOH, KOH, $Ca(OH)_2$,) and amines (e.g. triethylamine, ethylenediamine, ammonia).

Examples of acids suitable for modifying the pH include inorganic acids (e.g. hydrochloric acid (HCl), nitric acid ($HNO_3$), sulfuric acid ($H_2SO_4$), phosphoric acid ($H_3PO_4$), and organic acids such as formic acid ($CH_2O_2$), acetic acid ($CH_3COOH$), sulfamic acid ($H_3NSO_3$).

In one embodiment, before step (B), the solution provided in step (A) may be homogenised, for example by mechanical stirring, ultrasonic stirring or any other appropriate stirring.

In one embodiment, before step (B), the solution provided in step (A) may be subjected to at least one liquid-solid separation step, to remove for instance precipitates contained in the solution. The liquid-solid separation may be chosen from filtration, centrifugation and decantation.

In one embodiment, before step (B), the polarity and optionally the proticity of the solution provided in step (A) may be modified, advantageously they are adjusted by addition of a polar solvent, such as a protic polar solvent. Polar solvents are known to the one of skill in the art, and include ketones, in particular $C_1$-$C_8$ linear or branched ketones, such as acetone or ethylmethyl ketone. Protic solvents include water, alcohols (in particular $C_1$-$C_8$ linear or branched alcohols such as methanol, ethanol, isopropanol, ...), carboxylic acids (in particular $C_1$-$C_6$ linear or branched carboxylic acids such as formic acid or acetic acid,...), primary and secondary amines - typically of formula $R^1R^2NH$ with $R^1$ and $R^2$ independently selected from H and alkyl provided that at least one of $R^1$ and $R^2$ is not H -, and combination thereof. By way of example, the polar solvent may be added in proportions from 20 to 60%vol of the total solution.

As used herein, a "$C_1$-$C_8$ ketone" is understood as a linear or branched alkyl wherein two hydrogen atoms bound to the same carbon are replaced by and oxygen atoms. In other words, a C1-C8 ketone is a molecule of formula $C_{n1}H_{m1}C(O)C_{n2}H_{m2}$, wherein $n_1$ and $n_2$ are integers such that $n_1+n_2$ equals 7 or less, and $m_1$ and $m_2$ represent the number of hydrogen atoms necessary for each carbon to be tetravalent. For instance, in the case of a purely linear ketone, $m1 = 2n_1+1$ and $m2 = 2n_2+1$.

Two or more of the above described pre-treatments may be combined in any order. In particular, the person skilled in the art will know how to choose one or several of the above described pre-treatments to improve the recovery of spent metal-containing catalyst, typically by considering the effect of pH in the possible formation of salts and/or hydrogen bonds, the effect of the proticity on the interactions with the solvent and/or hydrogen bonds, the effect of polarity on Van der Walls interactions with the solvent, etc... An appropriate choice of one or several of the above described pre-treatments depending on the spent catalyst and the solution may allow a recovery yield of the spent catalyst contained in the solution of 80wt%.

Step (B) may advantageously be performed at ambient temperature, i.e. without any control of the temperature of the suspension. However, heating of the suspension may be envisaged, for example at a temperature from 35°C to Tb-10°C, where Tb is the boiling temperature of the solvent(s) of the solution.

Advantageously, step (B) may be performed under stirring.

During step (B) the solid adsorbent may be in contact with the solution for a sufficient time to adsorb a major content of the spent metal-containing homogeneous catalyst present in the solution. Such contact time may depend on the temperature of the solution and on stirring. By way of example, a contact time from 15 to 240 minutes is sufficient at ambient temperature and under stirring.

The content of solid adsorbent added in step (B) to the solution to treat may be sufficient to adsorb a major content of the spent homogeneous catalyst present in the solution.

Advantageously, the solid adsorbent added in the solution may represent from 0.1 to 10 wt%, preferably from 1 to 5 wt% of the total suspension, or within any of these limits.

After adsorption of the spent metal-containing homogeneous catalyst on the solid adsorbent, said solid adsorbent is separated from the suspension in step (C).

This separation may be performed by means of at least one solid-liquid separation step selected from a centrifugation, a filtration and a decantation, preferably centrifugation. In particular, filtration may be performed under reduced pressure.

As a result, a solid material with a dry matter content from 50 to 70 wt%, preferably from 35 to 60 wt%, can be obtained, free from solvents or with reduced amounts of solvents.

As used herein, the dry matter is understood as the weight determined in the relative absence of solvent(s), in particular after substantially all solvent(s) has been removed (until constant weight). The dry matter weight is typically measured by gravimetric analysis until weight stabilization.

Such solid-liquid separation step may advantageously combine several of the above technics to improve the recovery yield of solid adsorbent. In one embodiment, said at least one solid-liquid separation step may combine a centrifugation and filtration, for example by using a peeler centrifuge device.

The method may further comprise one or several of the following steps:

- a washing step with a solvent, advantageously water, in particular hot water,
- a steam stripping step,
- a drying step.

Such step(s) allows removing volatile organic compounds and/or solvent(s) eventually present on the solid adsorbent and may be performed either during step (C) or after step (C). This results in a solid material with increased dry matter content.

**Test and determination methods**

Metal determination in samples

Metal content of the solution containing the spent catalyst has been determined by means of inductively coupled plasma atomic emission spectrometry (ICP AES) using calibration standards. The apparatus used is a ICP Leeman Labs Prodigy / PRISM ICP spectrophotometer connected to computer (and autosampler).

A liquid sample is aspirated and nebulized through a nebulizer. The mist is introduced into the plasma, where the water evaporates and all connections are broken by very high temperatures. Due to the very high temperature, the atoms in the plasma end up in an excited state. Upon cooling, the atoms return to their ground state, with element-specific radiation emission occurring in the visual and UV wavelength range. This emitted light is measured by means of a spectrometer. There is, up to a certain atomic concentration, a linear relationship between the intensity of the emitted light and the atomic concentration. This allows the concentration of an element in the sample to be measured when working with calibration standards.

Before each measurement, a check standard is used to check whether the measured values are within the permitted accuracy. If this is not the case, the apparatus is recalibrated.

Internal standard containing 100ppm of the element to measure is used.

The measure of metal content is made on a liquid sample prepared by destruction of the solid or liquid sample to analyze with aqua regia on a hotplate under reflux as described below. Solid samples are ground in a mortar to a powder before destruction.

Destruction : the sample is homogenised by means of shake or by mixing it intensively with a spatula to a pasty mixture. 5 grams of product are weighted ad introduced into an Erlenmeyer flask, some cooking pearls are added as well a 50 ml of aqua regia (aqua regia : 1 vol. part 65 wt% nitric acid with 3 vol. parts 32 wt% hydrochloric acid). The liquid is boiled for 30 minutes and let cool down, then filtrated over 185mm and 150mm filters.

The resulting sample is measured, if necessary after dilution, the content of metal is then corrected with the following formula:

$$P \quad = \quad (X * Y * 100)/Z \text{ mg/kg.}$$

Where X represents the content in wt ppm, Y represents the dilution used, Z represents the sample quantity in grams, P represents the content in mg/kg.

**Examples**

The embodiments of the present invention will be better understood by looking at the different examples below. Tests have been performed on aqueous solutions containing 79.65ppm (in mass) of Pd of a spent Pd containing homogeneous catalyst, here dichlorobis(triphenylphosphine)palladium(II) (CAS Number: 13965-03-2).

Several adsorbents were tested of which activated carbon, sponge iron as well as some solvent extraction tests to concentrate the spent Pd-containing homogeneous catalysts in another phase.

A liquid solution P0 containing 79.65ppm (by weight) of Pd of a spent catalyst and other organic compounds is provided. This sample contains more than 60wt% of water and other organic compounds including polar aprotic solvents and salts. Solution P0 contains 1.5wt% of dry matter and its pH is 12.

Samples of the solution P0 have been submitted to the following treatments.

**Example 1 (comparative): Treatment with acid**

$H_3PO_4$ is added to a P0 sample until pH=9. Crystallization is observed and the sample is submitted to a vacuum filtration over a 11μm filter. A residue and a filtrate are recovered. The filtrate is named P1.
The residue is further washed with water. The washed residue is named P2.

**Example 2 (comparative): Solvent extraction with 2-ethylhexanol**

A P0 sample is washed with 2-ethylhexanol in a 50/50vol% proportion, submitted to a decantation and the water phase recovered and named P3.

**Example 3 (comparative): Solvent extraction with Solvesso 100®**

Solvesso 100® (CAS- 64742-95-6) is a light aromatic solvent naphtha (C8 to C10). A P0 sample is washed with Solvesso 100® in a 50/50vol% proportion. A pH=12 solution is obtained. This solution is then submitted to a decantation, the water phase is recovered and named P4.

**Example 4 (comparative): adsorption on activated carbon**

A P0 sample is mixed for 2 hours with 4wt% of powder activated carbon of ORGANOSORB® 10-AA from DESOTEC , having a BET surface of 940m²/g and a density of 430g/L. The powder is obtained by mortar grinding of the ORGANOSORB® 10-AA pellets. A pH=12 suspension is obtained. The suspension is then submitted to a vacuum filtration over a 11μm filter. A residue and a filtrate are recovered. The filtrate is named P5.

**Example 5 (comparative): distillation**

A P0 sample has been submitted to a vacuum distillation in a rotavapor. A thickening of the sample up to 4.75 times is obtained. The sample is named P9.

**Example 6 (comparative): adsorption on activated carbon**

A P0 sample is mixed for 2 hours with 4wt% of powder activated carbon ORGANOSORB ® 10 from DESOTEC having:

- a total BET surface of at least 950 m²/g, with typical values of 1020 m²/g,

- a density of 470±30 g/L.

The powder is obtained by mortar grinding of the ORGANOSORB®10 pellets.
A pH=12 suspension is obtained. The suspension is then submitted to a vacuum filtration over a 11μm filter. A residue and a filtrate are recovered. The filtrate is named P8.

**Example 7 (comparative): adsorption on sponged iron**

A P0 sample is mixed for 2 hours with 10wt% of sponge iron to check the reductive capacities. Sponge iron, also known as direct reduced iron, is the product of the direct reduction of iron ore in the solid stated by carbon monoxide and hydrogen derived from natural gas or coal. Sponge iron usually contains 81 to 88wt% of metallic iron, 1 to 5wt% of carbon, 3.5 to 9wt% of residual unreduced oxides mainly $SiO_2$ and $Al_2O_3$, but also CaO, MgO, MnO, etc. Typical size of sponge iron is 4-20mm, with an apparent density of 3.4 -3.6t/m³ and a bulk density of 1.6-1.9t/m³.
A pH=12 suspension is obtained. The suspension is then submitted to a vacuum filtration over a 11μm filter. A residue and a filtrate are recovered. The filtrate is named P6.

**Example 8: adsorption on bleaching earth**

Tonsil@ Optimum 210FF from CLARIANT has been used (CAS Number 70131-50-9) is a solid acid-leached bentonite containing 72wt% of $SiO_2$, 15.1wt% of $Al_2O_3$, 2.9wt% of $Fe_2O_3$, 0.3wt% of CaO, 1.2wt% of MgO, 0.6 wt% of

$Na_2O$, 1.6wt% of $K_2O$.

Several samples of P0 have each been mixed for 2 hours with a specific mass of bleaching earth per mass of P0 (total suspension). Suspensions with pH=12 are obtained. Each suspension has then been submitted to a vacuum filtration over a 11µm filter to recover a residue and a filtrate.

Table 1 below specifies the amount of bleaching earth added to the sample P0 and the name of the filtrated recovered. The Pd measurement on the bleaching earth (P17) after adsorption was checked and in line with the Pd mass balance.

Table 1

| Amount of bleaching earth/ total suspension (wt%) | Name of the filtrate obtained (organic phase) | Residue recovered after vacuum filtration | Aqueous phase recovered after washing the solid residue |
|---|---|---|---|
| 10 | P7 | | |
| 10 | P10 | P17 | P11 |
| 5 | P12 | | P13 |
| 1 | P14 | | P15 |

**Example 9**: adsorption on bleaching earth

A P0 sample is mixed for 2 hours with 2.5 wt% of bleaching earth from CLARIANT (Tonsil® Optimum 210FF). A pH=12 suspension is obtained. The suspension has then been submitted to a vacuum filtration over a 11µm filter to recover a residue and a filtrate. The filtrate is mixed 2 hours with 2.5 wt% of fresh bleaching earth from CLARIANT (Tonsil® Optimum 210FF) and then vacuum filtrated over a 11µm filter to recover a residue and a filtrate P16.

**Recovery efficiency of each treatment**

The amount in mg of Pd per kg of the sample (filtrate or residue) has been measured in each sample by ICP technic as described above. The amounts measured are gathered in table 2.

Table 2

| Sample | Amount of Pd (mg/kg) |
|---|---|
| P0 | 79.65 |
| P1 (comparative) | 89.33 |
| P2 (comparative) | 18.20 |
| P3 (comparative) | 50.60 |
| P4 (comparative) | 104.38 |
| P5 (comparative) | 35.16 |
| P6 (comparative) | 82.53 |
| P7 | 2.04 |
| P8 (comparative) | 43.69 |
| P9 (comparative) | 541 |
| P10 | 1.76 |
| P11 | 0.21 |
| P12 | 2.31 |
| P13 | 0.37 |
| P14 | 10.76 |
| P15 | 0.44 |

(continued)

| Sample | Amount of Pd (mg/kg) |
| --- | --- |
| P16 | 1.52 |
| P17 | 844.46 |

The Pd contents of the filtrate P1 and residue P2 obtained from the treatment with acid show a very poor recovery yield of Pd by crystallization, about 23wt%.

As can be seen from the Pd content recovered in the filtrates P5 and P8, activated carbon has shown an adsorption rate of the spent Pd catalyst from 50wt% to 60wt% which is not sufficient for further recovery of the Pd. The lower adsorption rate is more probably due to the presence of other solvents in the aqueous suspension, consuming additional amounts of activated carbon.

The Pd content in the filtrate P6 obtained from adsorption on sponge iron is high, showing a poor adsorption rate. Extraction with sponge iron, often used as metal-scavenger in wastewater treatment, is not effective enough.

Extraction with hydrocarbon solvents (Solvesso® 100) or alcohols (2-ethylhexanol) was not conclusive either as shown by the Pd content of water phases P3 and P4 which remains high.

Concentration by distillation (P9) allows recovering high amounts of Pd catalysts but is energetically costly.

Best concentration results were obtained with bleaching earths (Tonsil 210FF from Clariant). The Pd content of filtrates P7, P10, P12 obtained from adsorption on 5wt% to 10wt% of bleaching earths/total suspension is 2.31 ppm or less. This corresponds to a Pd absorption rate of 97wt% or more on the bleaching earths. With the use of 1wt% bleaching earths/total suspension, the filtrate obtained contains 10.76ppm, corresponding to an adsorption rate of 86.5wt%.

The Pd content of residue P17 - *i.e.* obtained with treatment with 10wt% of bleaching earths/total suspension - is far higher than the Pd content recovered from samples treated with comparative technics. The amount of Pd recovered in residue P17 is indeed:

- 1.5 times the amount of Pd recovered using distillation (sample P9)
- 46 times the amount recovered after an acidic treatment (sample P2)

Theses examples thus demonstrate the higher concentration capacity of the method of the invention, using bleaching earths.

Finally, the low contents of Pd in the aqueous phases P11, P13, P15 (i.e. aqueous phases recovered after washing of the residue obtained from bleaching earth treatment) show that there is no release of Pd in this aqueous phase upon washing.

These examples further demonstrate the effectiveness of the method of the invention.

**Claims**

1. Method for recovering a spent metal-containing homogeneous catalyst using a solid adsorbent selected from bleaching agents, filter aids and mixtures thereof.

2. Method as claimed in claim 1, wherein the solid adsorbent is selected from bleaching earths, perlites, diatomaceous earths and mixtures thereof.

3. Method as claimed in claim 1 or 2, wherein the solid adsorbent is a solid composition comprising from 50.0 to 95.0wt% of silicium oxide ($SiO_2$), from 5.0 to 50.0wt% of one or more oxides selected from aluminium oxide ($Al_2O_3$), iron III oxide ($Fe_2O_3$), potassium oxide ($K_2O$), calcium oxide (CaO), sodium oxide ($Na_2O$) and magnesium oxide (MgO).

4. Method as claimed in any of claims 1 to 3, wherein the solid adsorbent is a solid composition comprising from 50.0 to 75.0 wt% of silicium oxide ($SiO_2$), from 1.0 to 40.0wt% of a compound or mixture of compounds selected from aluminium oxide ($Al_2O_3$) and magnesium oxide (MgO), from 0.5 to 5.0wt% of iron III oxide ($Fe_2O_3$), from 0.5 to 6.0wt% of potassium oxide ($K_2O$), from 0.0 to 6.0wt% of a compound or mixture of compounds selected from calcium oxide (CaO) and sodium oxide ($Na_2O$).

5. Method as claimed in any of claims 1 to 3 wherein the solid adsorbent is a solid composition comprising from 50.0 to 80.0 wt% of silicium oxide ($SiO_2$), from 4.0 to 18.0wt% of aluminium oxide ($Al_2O_3$), from 0.0 to 2.5 wt% of iron III oxide ($Fe_2O_3$), from 0.5 to 7.0wt% of potassium oxide ($K_2O$), from 0.0 to 2.5wt% of calcium oxide (CaO), from 0.2 to 5.0wt% of sodium oxide ($Na_2O$) and from 0.1 to 1wt% or from 20 to 35wt% of magnesium oxide (MgO).

6. Method as claimed in any of claims 1 to 3 wherein the solid adsorbent is a solid composition comprising from 80.0 to 95.0wt% of silicium oxide ($SiO_2$), from 0.1 to 9.0wt% of aluminium oxide ($Al_2O_3$), from 0.1 to 4.5wt% of iron III oxide ($Fe_2O_3$), from 0.0 to 4.5wt% of calcium oxide (CaO) and from 0.0 to 1.5 wt% of magnesium oxide (MgO).

7. Method as claimed in any of claims 1-6, wherein said solid adsorbent is in powder form or in granular form.

8. Method as claimed in any of claims 1-7, wherein said solid adsorbent has a specific surface area from 150 to 400$m^2$/g.

9. Method as claimed in any of claims 1-8 wherein said spent metal-containing homogeneous catalyst contains one or more metals selected from Ag, Au, Pt, Pd, Rh, Ir, Ru.

10. Method as claimed in any of claims 1-9 comprising the following steps:

   (A) providing a solution containing said spent metal-containing homogeneous catalyst, said solution containing at least one solvent selected from water and an organic solvent,
   (B) adding to said provided solution said solid adsorbent to obtain a suspension of a solid and a solvent,
   (C) separating said suspension to obtain a purified solvent and said solid adsorbent containing said spent metal-containing homogeneous catalyst adsorbed thereon.

11. Method as claimed in claim 10, wherein prior to step (B), at least one of the following pre-treatment is performed

   - the pH of the solution provided in step (A) is adjusted to a basic, neutral or acidic pH,
   - the solution provided in step (A) is homogenised,
   - the solution provided in step (A) is submitted to at least one liquid-solid separation to remove optional precipitates contained in the solution
   - the polarity and optionally the proticity of the solution provided in step (A) is adjusted by addition of a polar solvent.

12. Method as claimed in any one of claims 10 or 11, wherein step (B) is performed at ambient temperature or from 35°C to Tb-10°C optionally under stirring, with Tb being the boiling temperature of the solvent(s) of the solution.

13. Method as claimed in any one of claims 10 to 12, wherein in step (B), the solid adsorbent added in the solution represents from 0.1 to 10wt%, preferably from 1 to 5wt% of the total suspension.

14. Method as claimed in any one of claims 10 to 13, wherein step (C) includes at least one solid-liquid separation step selected from a centrifugation, a filtration and a decantation.

15. Method as claimed in any one of claims 10 to 14, wherein the solid adsorbent containing said spent metal-containing homogeneous catalyst adsorbed thereon is submitted to at least one of the following steps, after step (C) or during step (C) :

   - a washing step with a solvent, advantageously water,
   - a steam stripping step,
   - a drying step.

**Europäisches Patentamt**

**European Patent Office**

**Office européen des brevets**

## EUROPEAN SEARCH REPORT

Application Number

EP 20 30 6700

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 104 972 A (MADGAVKAR AJAY M [US] ET AL) 14 April 1992 (1992-04-14) | 1-10,14,15 | INV. B01J31/40 |
| Y | * claims 1-3,6,8,22,23 * <br> * column 4, line 59 - column 5, line 19 * <br> * column 6, line 8 - line 15 * | 11-13 | B01J20/10 <br> B01J20/12 <br> B01J20/14 <br> B01J20/28 |
| X | WO 2015/171372 A1 (NOVOMER INC [US]) 12 November 2015 (2015-11-12) | 1-10,14,15 | |
| Y | * claim 1 * <br> * page 16, line 22 - page 17, line 30 * <br> * page 36, line 1 - line 4 * <br> * page 46, line 15 - line 17 * | 11-13 | |
| X | WO 2011/086578 A2 (RELIANCE IND LTD [IN]; PRAKASH KUMAR [IN] ET AL.) 21 July 2011 (2011-07-21) <br> * claims 1,3 * <br> * example 4 * <br> * tables 2A,2B * | 1,2 | |
| X | WO 2008/010862 A1 (EXXONMOBIL CHEM PATENTS INC [US]; WU MARGARET MAY-SOM [US] ET AL.) 24 January 2008 (2008-01-24) | 1-10,14,15 | TECHNICAL FIELDS SEARCHED (IPC) <br><br> B01J |
| Y | * claims 1,18,20-24 * <br> * paragraph [0062] - paragraph [0066] * | 11-13 | |

The present search report has been drawn up for all claims

| Place of search | Date of completion of the search | Examiner |
|---|---|---|
| The Hague | 15 June 2021 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 30 6700

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2021

| Patent document cited in search report | | Publication date | Patent family member(s) | | Publication date |
|---|---|---|---|---|---|
| US 5104972 | A | 14-04-1992 | NONE | | |
| WO 2015171372 | A1 | 12-11-2015 | EP | 3140292 A1 | 15-03-2017 |
| | | | US | 2017096407 A1 | 06-04-2017 |
| | | | US | 2020331877 A1 | 22-10-2020 |
| | | | WO | 2015171372 A1 | 12-11-2015 |
| WO 2011086578 | A2 | 21-07-2011 | CA | 2787437 A1 | 21-07-2011 |
| | | | EP | 2523979 A2 | 21-11-2012 |
| | | | KR | 20120135236 A | 12-12-2012 |
| | | | US | 2013341563 A1 | 26-12-2013 |
| | | | WO | 2011086578 A2 | 21-07-2011 |
| WO 2008010862 | A1 | 24-01-2008 | CA | 2657641 A1 | 24-01-2008 |
| | | | CN | 101490105 A | 22-07-2009 |
| | | | EP | 2041190 A1 | 01-04-2009 |
| | | | JP | 5555490 B2 | 23-07-2014 |
| | | | JP | 2009543927 A | 10-12-2009 |
| | | | US | 2008020928 A1 | 24-01-2008 |
| | | | WO | 2008010862 A1 | 24-01-2008 |

EPO FORM P0459

For more details about this annex : see Official Journal of the European Patent Office, No. 12/82